# EUROPÄISCHE PATENTANMELDUNG

(11) **EP 1 057 730 A1**
(43) Veröffentlichungstag der Anmeldung: **06.12.2000**
(21) Anmeldenummer: 99108810.5
(22) Anmeldetag: 04.05.1999
(51) Int. Cl.: B65B 57/10

(54) **Verfahren und Vorrichtung zum Erfassen von ophthalmischen Formkörpern in einer Verpackung**

(71) Anmelder: Novartis AG, 4058 Basel (CH)
(72) Erfinder: Die Erfindernennung liegt noch nicht vor
(74) Vertreter: Becker, Konrad

(57) **Zusammenfassung**

Die Erfindung bezieht sich auf ein Verfahren und eine Vorrichtung zum Erfassen der Anwesenheit eines ophthalmischen Formkörpers aus einem biokompatiblen polymeren Material, insbesondere eine ophthalmische Linse, speziell eine Kontaktlinse, in einer Verpackung. Die Erfindung löst das Problem durch die Verwendung eines spektroskopischen Verfahrens. Verpackungen, die einen Formkörper, insbesondere eine Kontaktlinse enthalten, weisen eine charakteristische Änderung in ihrem Messspektrum gegenüber einer Verpackung ohne Kontaktlinsen auf. Durch Auswertung der Spektren lässt sich bestimmen, ob sich in der Verpackung eine Kontaktlinse befindet oder nicht. Insbesondere kann durch das Messverfahren gemäss der Erfindung direkt nach dem Befüllungsvorgang bestimmt werden, ob sich eine Kontaktlinse in der Verpackung befindet. Ausserdem ist die Erfindung geeignet, um in der bereits verschlossenen Verpackung zu überprüfen, ob Kontaktlinsen enthalten sind. Die Verpackung bleibt bei dem Vorgang unversehrt.

## Beschreibung

Die Erfindung bezieht sich auf ein Verfahren und eine Vorrichtung zum Erfassen der Anwesenheit eines ophthalmischen Formkörpers aus einem biokompatiblen polymeren Material, insbesondere eine ophthalmische Linse, speziell eine Kontaktlinse, in einer Verpackung.

Ophthalmische Formkörper werden üblicherweise in einer Verpackung für die Aufbewahrung und den Transport abgelegt. Bei den Verpackungen handelt es sich häufig um sogenannte Blisterpackungen. Eine Blisterpackung besteht aus einer Kunststoffschale, beispielsweise aus Polypropylen (PP), die nach Einfüllen des Formkörpers in die Kunststoffschale mit einer Folie oberseitig verschweisst wird.

Insbesondere werden Kontaktlinsen, die in grossen Stückzahlen hergestellt werden, wie beispielsweise Eintageskontaktlinsen, in Blisterpackungen eingeschweisst. Derartige Kontaktlinsen werden bevorzugt nach dem sogenannten Mould bzw. Full-Mould-Verfahren gefertigt. Bei diesem Verfahren werden die Linsen zwischen zwei Formen (Moulds) in ihrer endgültigen Form hergestellt, so dass weder eine nachträgliche Bearbeitung der Oberflächen der Linsen noch eine Bearbeitung des Randes erforderlich ist. Mould-Verfahren sind beispielsweise in der PCT-Anmeldung Nr. WO/87/04390 oder in der europäischen Patentanmeldung EP-A-0 367 513 beschrieben.

Zur Herstellung einer Kontaktlinse wird zunächst in die weibliche Formhälfte eine bestimmte Menge des fliessfähigen Ausgangsmaterials eingebracht. Danach wird die Form durch Aufsetzen der männlichen Formhälfte geschlossen. Üblicherweise wird das Ausgangsmaterial etwas überdosiert, so dass die überschüssige Menge beim Schliessen der Form in einen an die Formkavität nach aussen angrenzenden Überlaufraum verdrängt wird. Die anschliessende Polymerisation bzw. Vernetzung des Ausgangsmaterials erfolgt durch Bestrahlung mit UV-Licht bzw. durch Wärmeeinwirkung oder eine andere nichtthermische Methode.

Die auf diese Weise hergestellten Kontaktlinsen sind mechanisch wenig stabile Formteile mit einem Wassergehalt von über 60 Gew.%. Nach ihrer Fertigstellung wird die Linse noch messtechnisch kontrolliert, dann verpackt und einer Hitzesterilisation bei 121 °C in einem Autoklaven unterworfen.

In der US-A-5,508,317 ist ein neues Kontaktlinsenmaterial beschrieben, das eine wichtige Verbesserung in der Chemie von polymerisierbaren Ausgangsmaterialien für die Herstellung von Kontaktlinsen darstellt. Das Patent offenbart eine wasserlösliche Zusammensetzung eines Präpolymers, das in die Formkavität eingefüllt und anschliessend photochemisch vernetzt wird. Da das Präpolymer mehrere vernetzbare Gruppen trägt, zeichnet sich die Vernetzung durch eine hohe Qualität aus, so dass innerhalb weniger Sekunden eine fertige Linse von optischer Güte hergestellt werden kann, ohne dass nachfolgende Extraktions- oder Nachbearbeitungsschritte erforderlich wären. Durch die in dem Patent vorgestellte verbesserte Chemie des Ausgangsmaterials können Kontaktlinsen zu erheblich niedrigeren Kosten hergestellt werden, so dass hierdurch die Herstellung von Einmal-Tragelinsen ermöglicht wird.

In Serien hergestellte optische Teile, z.B. Kontaktlinsen, müssen auf Fehler wie Kratzer, Lunker oder ausgebrochene Ränder geprüft werden. Die als fehlerhaft erkannten Teile werden anschliessend ausgesondert. Es ist jedoch derzeit nicht vorgesehen, zu überprüfen, ob eine Verpackung tatsächlich mit einer Kontaktlinse befüllt worden ist. Unter bestimmten Umständen können jedoch leere Packungen auftreten, die nicht erkannt werden. Der Kunde findet dann die leere Verpackung vor und ist entsprechend verärgert. Werden jedoch zufällig oder durch Stichproben leere Packungen erkannt, so muss entweder die gesamte Charge verworfen werden oder eine manuelle 100%-Prüfung aller Kontaktlinsenverpackungen ist erforderlich. Beide Vorgehensweisen sind mit erheblichen Kosten verbunden.

Der Erfindung liegt daher das Problem zugrunde, ein Prüfungsverfahren zur Verfügung zu stellen, mit dem mit geringem Aufwand erfasst werden kann, ob sich ein ophthalmischer Formkörper tatsächlich in der Verpackung befindet.

Die Erfindung löst diese Aufgabe mit den in Anspruch 1 angegebenen Merkmalen. Hinsichtlich weiterer wesentlicher Ausgestaltungen wird auf die abhängigen Ansprüche verwiesen.

Durch die Verwendung eines spektroskopischen Verfahrens ist es möglich, die Anwesenheit von ophthalmischen Formkörpern in einer Verpackung festzustellen. Verpackungen, die einen Formkörper, insbesondere eine Kontaktlinse enthalten, weisen eine charakteristische Änderung in ihrem Messspektrum gegenüber einer Verpackung ohne Kontaktlinsen auf. Durch Auswertung der Spektren lässt sich bestimmen, ob sich in der Verpackung eine Kontaktlinse befindet oder nicht. Insbesondere kann durch das Messverfahren gemäss der Erfindung direkt nach dem Befüllungsvorgang bestimmt werden, ob sich eine Kontaktlinse in der Verpackung befindet. Ausserdem ist die Erfindung geeignet, um in der bereits verschlossenen Verpackung zu überprüfen, ob Kontaktlinsen enthalten sind. Die Verpackung bleibt bei dem Vorgang unversehrt.

Weitere Einzelheiten und Vorteile der Erfindung ergeben sich aus der nachfolgenden Beschreibung und der Zeichnung. In der Zeichnung zeigen:
- Fig.1: eine schematische Darstellung eines Ausführungsbeispiels einer Messeinrichtung gemäss der Erfindung mit einer offenen Verpackung;
- Fig.2: eine schematische Darstellung eines Ausführungsbeispiels einer Messeinrichtung mit einer geschlossenen Verpackung;
- Fig.3: Darstellung verschiedener Messspektren jeweils bei einem Abstand von 40 mm für die folgenden Versuchsparameter, wobei jeweils die Absorption gegen die Wellenlänge des eingestrahlten NIR-Lichtes aufgetragen ist:
3.1. PP-Schale ohne Kontaktlinse und trocken;
3.2. PP-Schale ohne Kontaktlinse und mit Wassertropfen mit einem Durchmesser von ca. 2-4 mm;
3.3. PP-Schale ohne Kontaktlinse und halbvoll mit destilliertem Wasser;
3.4. PP-Schale mit Kontaktlinse, die mit Wassertropfen mit einem Durchmesser von ca. 2-4 mm befeuchtet war;
3.5. PP-Schale mit Kontaktlinse, die abgetupft wurde.

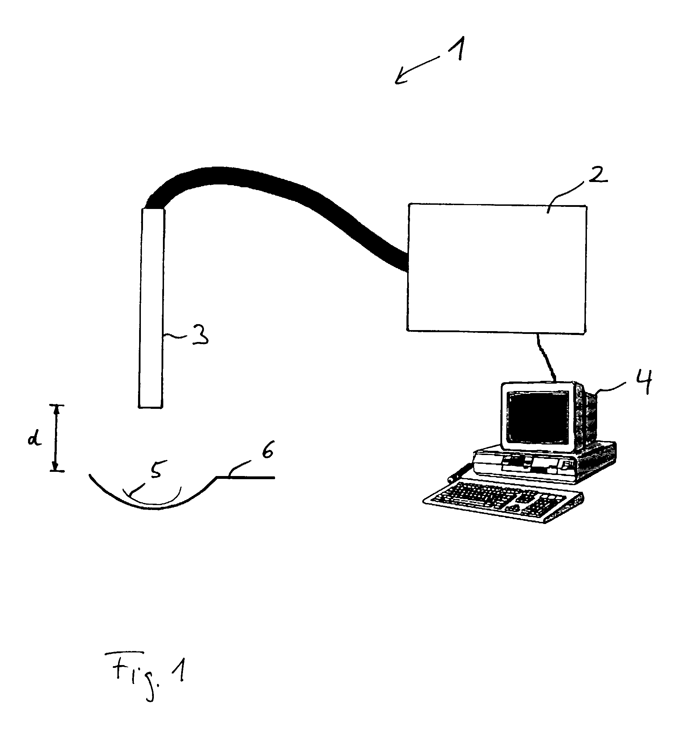

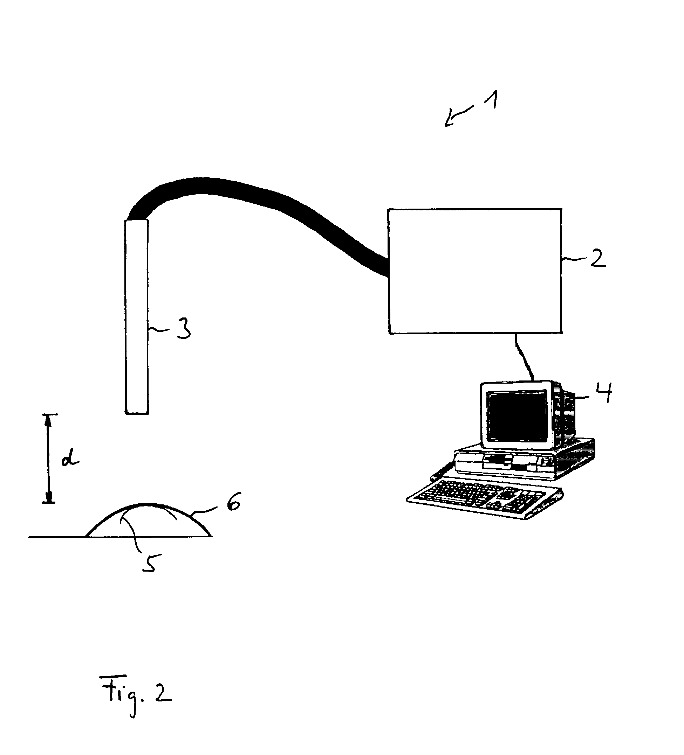

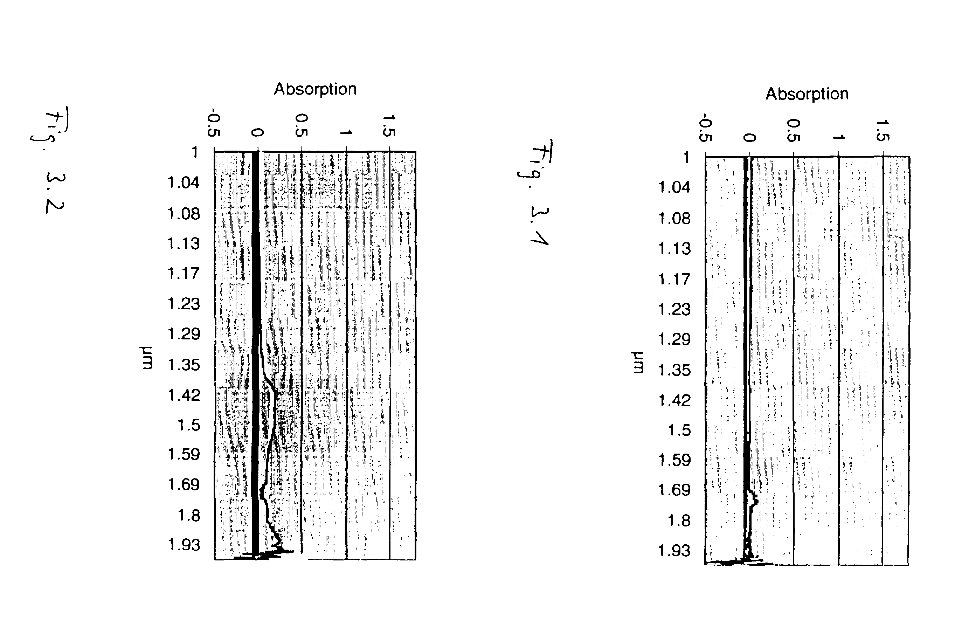

In Fig. 1 ist eine Messeinrichtung 1 dargestellt. Die Messeinrichtung umfasst ein Spektrometer 2, das mit einer Faseroptik 3 verbunden ist und an einen Rechner 4 zur Auswertung der Daten angeschlossen ist. Bei dem dargestellten Ausführungsbeispiel wurden die Messungen im nahen Infrarot (NIR) durchgeführt. Als NIR-Spektrometer wurde ein Gerät der Firma Bruker vom Typ IFS 28/N verwendet. Es liegt jedoch im Rahmen der Erfindung, Messungen im gesamten Infrarot-Bereich, aber auch im gesamten elektromagnetischen Wellenbereich einschliesslich UV und Mikrowellen durchzuführen. Die Faseroptik 3 ist vorteilhafterweise für Messungen in Reflexion ausgelegt, d.h. ein Teil der Fasern dient zur Bestrahlung der Probe mit NIR-Licht, während ein anderer Teil die reflektierte Strahlung aufnimmt und an das Spektrometer 2 weiterleitet. Ein ophthalmischer Formkörper, vorzugsweise eine Kontaktlinse 5 befindet sich in einer Verpackungsschale 6 und wird von dem aus der Faseroptik 3 austretenden NIR-Licht bestrahlt. Das reflektierte Licht wird gleichfalls von der Faseroptik 3 aufgenommen und an das NIR-Spektrometer 2 zur Detektion weitergeleitet. Die Verpackungsschale 6 besteht vorzugsweise aus Polypropylen (PP). Der Abstand d zwischen der Verpackung 6 und der Faseroptik 3 kann variiert werden.

Bei dem Messverfahren gemäss der Erfindung handelt es sich um kein bildgebendes Verfahren, da der zu untersuchende Formkörper 5 nicht abgebildet wird. Detektiert werden vielmehr Resonanzschwingungen von bestimmten Atomgruppen des biokompatiblen polymeren Materials, aus dem der Formkörper besteht, die durch das eingestrahlte NIR-Licht angeregt worden sind. Des weiteren ist es auch möglich, dass der Formkörper mit einem Benetzungsmittel versehen ist, das durch das eingestrahlte NIR-Licht angeregt wird. Darüber hinaus ist es im Rahmen der Erfindung auch denkbar, dass der ophthalmische Formkörper mit einer weiteren Substanz, die in die Verpackung eingefüllt wird, eine chemische Reaktion durchführt, die für die Detektion von Schwingungsanregungen genutzt werden kann. In jedem Fall treten die Resonanzschwingungen nur auf, wenn ein ophthalmischer Formkörper wie beispielsweise eine Kontaktlinse sich in der Verpackung befindet.

Die folgenden beispielhaften Versuche wurden mit Kontaktlinsen 5 durchgeführt, die aus PVA bestehen. PVA ist ein Präpolymer, das mehrere vernetzbare Gruppen sowie C-OH-Gruppen enthält. Bei den durchgeführten Versuchen wurde der Abstand zwischen der Kontaktlinse 5 und der Faseroptik 3 verändert, wobei vorzugsweise bei 10, 20, 30 und 40 mm gemessen wurde. Bei jedem Abstand wurde an einer leeren und trockenen PP-Schale eine Hintergrundmessung vorgenommen (Basismessung). Diese Hintergrundmessung wird vom Spektrometer automatisch von den anschliessend aufgenommenen Spektren abgezogen.

Es wurden bei einer Messanordnung gemäss Fig. 1, d. h. bei einer Prüfung von oben in die offene PP-Schale hinein, die folgenden Messungen durchgeführt:
1. PP-Schale ohne Kontaktlinse und trocken;
2. PP-Schale ohne Kontaktlinse und mit Wassertropfen mit einem Durchmesser von ca. 2-4 mm;
3. PP-Schale ohne Kontaktlinse und halbvoll mit destilliertem Wasser;
4. PP-Schale mit Kontaktlinse, die mit Wassertropfen mit einem Durchmesser von ca. 2 - 4 mm befeuchtet war;
5. PP-Schale mit Kontaktlinse, die abgetupft wurde.

Jede Messung wurde dreimal wiederholt, wobei die Probe jeweils neu unter der Faseroptik positioniert wurde.

Es konnte gezeigt werden, dass sich die Spektren der PP-Schalen ohne Kontaktlinsen in ihrer Form deutlich von denen mit Kontaktlinsen unterscheiden. Dabei kommt es offensichtlich auf den Abstand der Messoptik zur Probe an. Es zeigte sich, dass ein Abstand von 40 mm zwischen Verpackung 6 und Faseroptik 3 bei der verwendeten Apparatur vorteilhaft war, da bei diesem Abstand der gesamte Bereich, in dem die Kontaktlinse sich befinden kann, erfasst wurde.

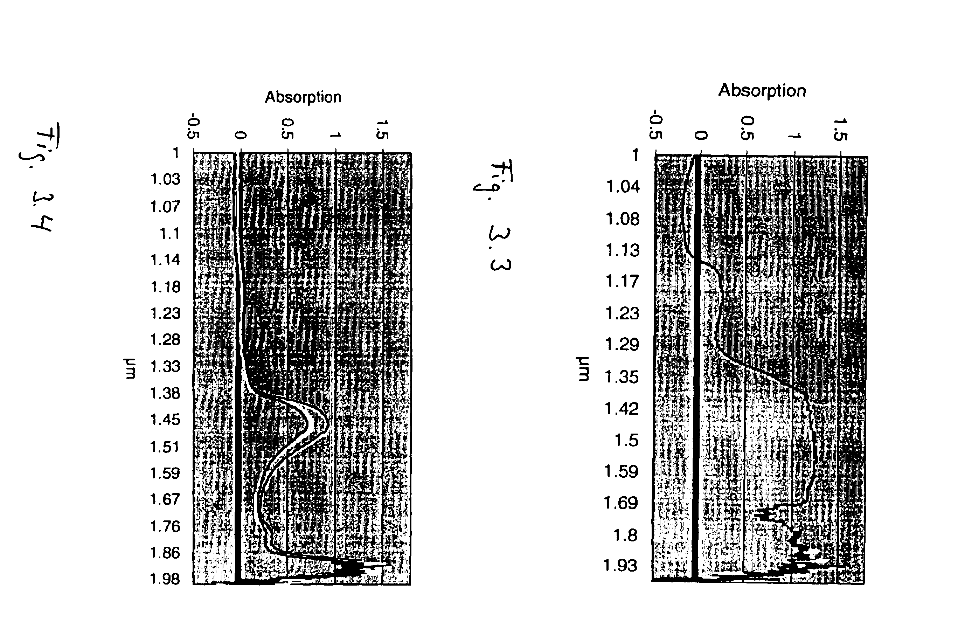

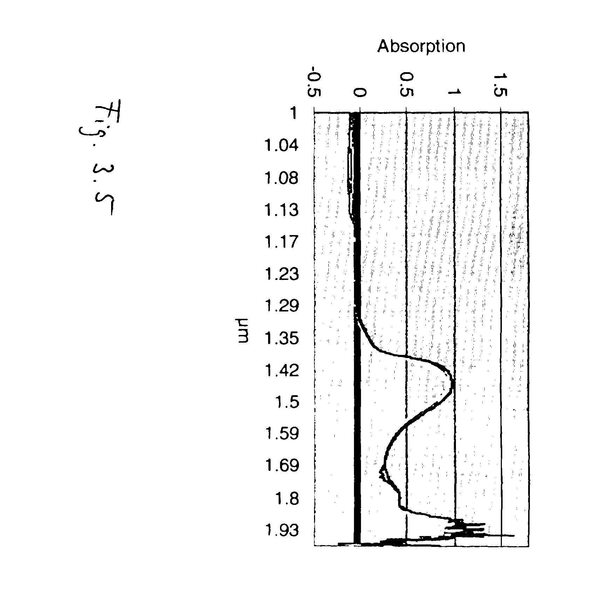

Die aufgenommen Spektren für einen Abstand von 40 mm sind in Fig. 3 dargestellt. In den in Fig. 3.1 - 3.5 dargestellten Spektren wurde jeweils die Absorption gegen die Wellenlänge des eingestrahlten NIR-Lichtes aufgetragen. Die Messungen zeigen für eine PP-Schale ohne Kontaktlinse (Fig. 3.1) keine Absorption des eingestrahlten Lichtes. Befinden sich Wassertropfen in der PP-Schale (Fig. 3.2), so ist eine geringe Absorption festzustellen. Mit zunehmender Befüllung der Schale mit Wasser wird die Absorption verstärkt, wobei diese sich über einen breiten Wellenlängenbereich erstreckt und keine spezifische Struktur erkennen lässt (Fig. 3.3). Befindet sich hingegen eine Kontaktlinse 5 in der Schale 6, mit oder ohne Wassertropfen, so ist ein deutlicher Peak mit einem Maximum bei einer Wellenlänge von 1,45 µm festzustellen (Fig. 3.4, 3.5). Dieser Peak tritt nur auf, wenn sich eine Kontaktlinse in der Verpackung befindet und ist daher als Charakteristikum für eine befüllte Verpackung geeignet. Selbstverständlich ist es im Rahmen der Erfindung möglich, eine Resonanzfrequenz bei einer anderen Wellenlänge auszuwählen, die gleichfalls charakteristisch für den ophthalmischen Formkörper ist.

Vorgenommene Messungen an einer versiegelten PP-Schale zeigen, dass es prinzipiell möglich ist, durch die PP-Schale hindurch Kontaktlinsen zu detektieren. Das Messsignal ist zwar kleiner als bei den Versuchen in der offenen Schale, aber dennoch eindeutig unterscheidbar.

Insgesamt ist durch die Erfindung die Möglichkeit gegeben, eine Anwesenheitskontrolle von Formkörpern, insbesondere von ophthalmischen Linsen, speziell Kontaktlinsen in einer Verpackung durchzuführen, wobei die Verpackung offen oder geschlossen sein kann. Insbesondere die NIR-Spektroskopie stellt ein sehr interessantes Verfahren zur Detektion von Kontaktlinsen in der Packung dar.

## Patentansprüche

1. Verfahren zum Erfassen von ophthalmischen Formkörpern, insbesondere ophthalmischen Linsen, speziell Kontaktlinsen, aus einem biokompatiblen polymeren Material, wobei sich der Formkörper in einer offenen oder geschlossenen Verpackung befindet, **dadurch gekennzeichnet,** dass der Formkörper einer elektromagnetischen Strahlung ausgesetzt und das Messspektrum abgebildet wird, wobei eine für den Formkörper und/oder eine für eine mit dem Formkörper verbundene Substanz charakteristische Resonanzfrequenz ausgewählt wird.

2. Verfahren nach Anspruch 1, dadurch gekennzeichnet, dass eine elektromagnetische Strahlung im Infrarot-Bereich ausgewählt wird.

3. Verfahren nach Anspruch 1 oder 2, dadurch gekennzeichnet, dass eine Strahlung im nahen Infrarotbereich ausgewählt wird.

4. Verfahren nach einem oder mehreren der Ansprüche 1 bis 3, dadruch gekennzeichnet, dass zur Bestrahlung der Verpackung eine Faseroptik verwendet wird.

5. Verfahren nach einem oder mehreren der Ansprüche 1 bis 4, dadurch gekennzeichnet, dass der Abstand zwischen der Bestrahlungsoptik und der Verpackung zwischen 5 mm und 100 mm beträgt.

6. Verfahren nach einem oder mehreren der Ansprüche 1 bis 4, dadurch gekennzeichnet, dass der Abstand zwischen der Bestrahlungsoptik und der Verpackung zwischen 30 mm und 50 mm beträgt.

7. Verfahren nach Anspruch 5 oder 6, dadurch gekennzeichnet, dass der Abstand zwischen der Bestrahlungsoptik und der Verpackung etwa 40 mm beträgt.

8. Verfahren nach einem oder mehreren der Ansprüche 1 bis 7, dadurch gekennzeichnet, dass die Verpackung aus Polypropylen besteht.

9. Verfahren nach einem oder mehreren der Ansprüche 1 bis 9, dadurch gekennzeichnt, dass der ophthalmische Formkörper eine Kontaktlinse ist.
